# EUROPÄISCHE PATENTSCHRIFT

(11) **EP 3 448 584 B1**
(45) Veröffentlichungstag und Bekanntmachung des Hinweises auf die Patenterteilung: **02.06.2021**
(21) Anmeldenummer: 17711183.8
(22) Anmeldetag: 17.03.2017
(51) Int. Cl.: B05C 17/005, B05C 17/015, B01F 7/00, B01F 15/00, B01F 13/00

(54) **MISCHERAUFSATZ FÜR EINE MEHRKOMPONENTENKARTUSCHEN-PISTOLE**
MIXER ATTACHMENT FOR A MULTI-COMPONENT-CARTRIDGE GUN
ACCESSOIRE MÉLANGEUR POUR PISTOLET À CARTOUCHE MULTICOMPOSANTS

(30) Priorität: 18.03.2016 DE 102016003538
(43) Veröffentlichungstag der Anmeldung: 06.03.2019
(73) Patentinhaber: Tartler, Udo, 64750 Lützelbach/Haingrund (DE)
(72) Erfinder: Tartler, Udo, 64750 Lützelbach/Haingrund (DE)
(74) Vertreter: Hoffmann Eitle
(86) Internationale Anmeldenummer: PCT/EP2017/056348
(87) Internationale Veröffentlichungsnummer: WO 2017/158144

(56) Entgegenhaltungen:
- DE-A1-102007 040 302
- DE-U1- 9 417 665
- US-A- 4 067 479
- US-A1- 2014 301 153

## Beschreibung

Die vorliegende Erfindung betrifft einen Mischeraufsatz, der eingerichtet ist, sich an einer Mehrkomponentenkartuschen-Pistole (insbesondere einer Doppelkartuschen-Pistole oder einem sogenannten Austraggerät) befestigen zu lassen, wobei die Pistole eingerichtet ist, alle flüssigen Komponenten (die in den Behältern einer in die Pistole eingesetzten Mehrkomponentenkartusche enthalten sind) gleichzeitig in einem bestimmten Volumenstromverhältnis aus den Auslassöffnungen der Behälter der Kartusche hinaus zu fördern - und wobei der Mischeraufsatz dazu eingerichtet ist, dann diese flüssigen Komponenten mit einander zu vermischen.

Zum Herstellen von Kunststoff aus mindestens zwei Komponenten zum Beispiel beim Aufbringen eines Zweikomponentenklebstoffs auf die zu fügenden Bauteile oder beim Aufbringen von Kunststoff auf eine Klebenaht eines Rotorblatts einer Windkraftanlage oder als Spachtelmasse werden bei einigen Kunststoffen mindestens zwei fluide Komponenten so mit einander vermischt, dass sich das entstandene insbesondere flüssige oder pastöse Gemisch vernetzt und (gegebenenfalls in der Gussform) "aushärtet".

Dieses Mischen von Kunststoff aus zumeist zwei Komponenten in kleineren Mengen zum Beispiel zur Reparatur oder zum Ausbessern von Oberflächenfehlern erfolgt mittels bekannter Mischvorrichtungen, die von einer Person nur mit Körperkraft tragbar und handhabbar zum Mischen von mindestens zwei flüssigen Komponenten zu einem aushärtenden Kunststoff eingerichtet sind, nämlich sogenannter Mehrkomponentenkartuschen-Pistolen (insbesondere Doppelkartuschen-Pistolen oder "Austraggeräten" - nur zum Beispiel unter dem Namen Mixpac der Firma Sulzer). Eine solche Pistole ist eingerichtet, alle flüssigen Komponenten (die in den Behältern einer in die Pistole eingesetzten Mehrkomponentenkartusche enthalten sind) gleichzeitig in einem bestimmten Volumenstromverhältnis aus einer Auslassöffnung des jeweiligen Behälters der Kartusche hinaus zu fördern - hinein in einen aufsetzbaren statischen Mischer, der dazu eingerichtet ist, diese flüssigen Komponenten dann beim Durchfließen durch seine internen Verwirbelungskonturen und/oder -Labyrinthe mit einander zu vermischen.

Dagegen bei der Herstellung von großen Mengen von Kunststoff stehen aufwendigere Misch- und Dosieranlagen zur Verfügung:
Auch hier erfolgt die Applikation des gemischten noch flüssigen Kunststoffs (zum Beispiel auf ein Fasergelege oder - gewebe zum Herstellen von GFK oder CFK oder zum Beispiel auch das Einleiten in eine Gussform) durch eine rohrförmige Durchleitung (Mischer) mit Formelementen (Verwirbelungselementen) in ihrem Innenraum, die hindurchströmendes Fluid verschiedentlich um-, ablenken, lokal stauen, Turbulenzen erzeugen und/oder verwirbeln und somit durchmischen. In diesen Mischer hinein führen bekanntlich Zuleitungen insbesondere in der Anzahl der fluiden Komponenten, aus denen der Kunststoff zusammenzumischen ist.

Die Verwirbelungselemente sind üblicherweise als sogenannter "Mischereinsatz" in die oft kreiszylindrische Durchleitung (rohrförmige Mischkammer) einsetzbar - und zwar entweder drehfest, so dass sich insgesamt ein sogenannter (oben bereits erwähnter auch bei den tragbaren Pistolen verwendbarer) "statischer" Mischer als üblicherweise auswechselbarer Einsatz ergibt - oder drehangetrieben bei einem sogenannten "dynamischen" Mischer.

Ein Mischereinsatz eines dynamischen Mischers weist üblicherweise ein Trägerstabelement mit mindestens einem Verwirbelungselement auf. Vorzugsweise ist das Trägerstabelement länglich und/oder gerade, insbesondere zylindrisch. Und vorzugsweise sind mehrere Verwirbelungselemente um das vorzugsweise längliche Trägerstabelement herum angeordnet zum Beispiel wie Propellerflügel um eine Propellerachse. Der Mischereinsatz ist betreffend den Durchmesser seiner Außenkontur (also insbesondere den freien Enden der Propellerflügelartigen Verwirbelungselemente) zum Einsatz in die rohrförmige Durchleitung angepasst.

Der Mischereinsatz ist zum Beispiel so angepasst, dass er mindestens einen (von den Komponenten durchflossenen) Querschnitt der Durchleitung mit seinen Verwirbelungselementen durchkreuzt oder er mit seinen Verwirbelungselementen in mindestens einen solchen Querschnitt der Durchleitung hineinragt. Die dort hindurch strömenden Fluide werden dann strömungsmechanisch zum Beispiel um- und/oder ablenkt, lokal gestaut, Turbulenzen werden in ihnen erzeugt und/oder sie werden verwirbelt - und somit durchmischt. Das Trägerstabelement dient dabei im Wesentlichen dazu, die Verwirbelungselemente zu dem einen Bauteil des Mischereinsatzes zu vereinen, es muss also nicht unbedingt "Stab"-förmig sein, geschweige denn zylindrisch. In Bereichen, wo die Verwirbelungselemente direkt aneinandergrenzen, muss ein Trägerstabelement nicht einmal überhaupt erkennbar sein, weil die Verwirbelungselemente selbst direkt in einander übergehen können. So ist der Begriff "Trägerstabelement" im allerweitesten Sinne zu verstehen als irgendein Verbindungselement (oder irgendwelche Verbindungselemente) auch zur Drehbewegungsübertragung zwischen den Verwirbelungselementen.

Wie gesagt kann ein Mischer mit einem derartigen Mischereinsatz als dynamischer Mischer eben für "dynamisches" Mischen gebaut oder eingerichtet sein - also mit einem Drehantrieb für den Mischereinsatz und mit einer genügend "weiten" Durchleitung (rohrförmigen Mischkammer), in der der Mischereinsatz sich drehen kann. Mischereinsatz und/oder Durchleitung können so konstruiert und kalkuliert sein, dass sie sich zum Beispiel nach einmaligem Gebrauch entsorgen und ersetzen lassen (diese nennen sich im Handel dann "dynamische Einweg-Kunststoffmischer").

Derartige dynamische Mischer kommen auch in der Erfindung zum Einsatz.

Mit einer solchen Produktions-Misch- und Dosieranlage jedenfalls wird in der Produktion insbesondere von großen Kunststoffteilen das Vermischen großer Mengen von Komponenten so spät wie möglich zum Beispiel vor dem Einleiten in die Gussform oder dem Aufbringen auf das Gelege oder Gewebe etwa in der Form eines Rotorblatts für eine Windkraftanlage gewährleistet.

Dies ermöglicht die Verwendung auch von Kunststoff mit kurzer "Topfzeit", Kunststoff also, der schon kurze Zeit nach dem Vermischen vernetzt und dadurch schnell an Fließfähigkeit (Viskosität) verliert, die er zum Beispiel braucht, um die Gussform vollständig auszufüllen oder das Gelege oder Gewebe vollständig zu durchtränken.

Die bekannten Produktions-Misch- und Dosiervorrichtungen sind Standgeräte, die bei der Herstellung der Kunststoffteile (zum Beispiel mittels der genannten formgebenden Verfahren) am Herstellungsort, etwa einer Werkshalle, grundsätzlich völlig zufriedenstellend einsetzbar sind.

In den Standgeräten für die Produktion sind die erforderlichen Aggregate und Elemente gut unterzubringen wie insbesondere auch die voluminösen Vorratsbehälter der Kunststoffkomponenten, die Förderantriebe zum Bewerkstelligen des Transports der Kunststoffkomponenten aus den Vorratsbehältern in den "Mischkopf" (Durchleitung und Mischereinsatz) sowie bei dynamischen Mischern der Drehantrieb. Um den gemischten, noch flüssigen Kunststoff gut und leicht handhabbar an den jeweils erforderlichen Ort zu bringen, ist ein Mischkopf mit einem Auslass für den gemischten Kunststoff an einem Ende eines Bündels flexibler Leitungen angeordnet, nämlich zumindest der Komponentenzuleitungen sowie - beim dynamischen Mischer - zum Beispiel einer flexiblen Welle, die die Drehantriebsleistung von einem Motor am Standgerät auf den in der Durchleitung drehbaren Mischer überträgt. Der Mischkopf und/oder das Leitungsbündel hängt oft an einem Teleskopseil oder ist an einem Auslegerarm (Mischkopfgalgen) befestigt, um das erhebliche Gewicht aufzufangen und so dann trotzdem recht gut handhabbar zu sein. Die übrigen Aggregate und Elemente der Misch- und Dosieranlage für die Produktion sind ortsfest.

Derart hergestellte Kunststoffteile benötigen aber oftmals nachträglichen Materialauftrag in kleinen Mengen: zum Beispiel auf verschlissenen Oberflächen oder wegen welcher Beschädigung auch immer. Oftmals kann dies nicht mehr mit der Produktionsanlage erfolgen, oder es wäre unwirtschaftlich. Denn die Produktionsanlage in Betrieb zu nehmen, ist aufwendig - und sie ohne Ausstoß von gemischtem Kunststoff in Betriebsbereitschaft zu halten ist zum Beispiel wegen des üblicherweise auch in der Anlage, wenn sie nicht fördert, schnell härtenden Kunststoffs grundsätzlich kaum oder nur für sehr kurze Zeit möglich.

Deshalb gibt es die einleitend schon erwähnten tragbaren Kartuschen-Mischvorrichtungen oder "Mischpistolen", in die kleine Behältereinheiten (Kartuschen) jeweils mit den Kunststoffkomponenten einsetzbar sind und die mit einfachen Förderantriebseinrichtungen die Kunststoffkomponenten schließlich in und durch eine Mischkammer fördern und ganz zuletzt aus einem Auslass hinaus - wodurch der Kunststoff von Hand mittels solcher Hand-Mischvorrichtungen in kleiner Menge auf die zu reparierende Stelle aufgebracht werden kann.

Manche Kunststoffe benötigen für ihre Herstellung (Mischung) allerdings die nur mit dynamischen Mischern erreichbare bessere Durchmischung. Kartuschen-Mischvorrichtungen können dies nicht. Zur Mischung in Kartuschen-Mischvorrichtungen geeignete Reparatur-Kunststoffe müssen dann als Mischungen mit zu diesem Zweck abgewandelter Rezeptur konfiguriert werden - mit in aller Regel mindestens einer schlechteren Materialeigenschaft als der Originalkunststoff, nicht zuletzt auch mit dem Nachteil der nach der Reparatur verlorenen gegangenen Materialhomogenität am Bauteil wegen des andersartigen Reparaturwerkstoffs.

Der vorliegenden Erfindung liegt die Aufgabe zu Grunde, eine von einer Person nur mit Körperkraft tragbare und handhabbare Mischvorrichtung zum Mischen von mindestens zwei flüssigen Komponenten zu einem aushärtenden Kunststoff zu schaffen, deren Effizienz verbessert ist. Insbesondere liegt der vorliegenden Erfindung die Aufgabe zu Grunde, eine von einer Person nur mit Körperkraft tragbare und handhabbare Kartuschen-Mischvorrichtung oder Mischpistole, die zum Mischen von mindestens zwei flüssigen Komponenten zu einem aushärtenden Kunststoff eingerichtet und an Mehrkomponentenkartuschen mindestens einer bestimmten Geometrie, insbesondere mindestens einer bestimmten Anschlussgeometrie, angepasst ist, alle flüssigen Komponenten, die in den Behältern einer in die Pistole eingesetzten Mehrkomponentenkartusche enthalten sind, gleichzeitig in einem bestimmten Volumenstromverhältnis aus einer Auslassöffnung des jeweiligen Behälters der Kartusche hinaus zu fördern, in ihrer Effizienz zu verbessern.

Diese Aufgabe wird von einem Mischereinsatz mit den Merkmalen des Anspruchs 1 gelöst. Bevorzugte Ausgestaltungen sind in den Unteransprüchen angegeben.

Erfindungsgemäß ist ein Mischeraufsatz, der als Vorrichtung eingerichtet ist, sich an einer Mehrkomponentenkartuschen-Pistole befestigen zu lassen. Die Pistole kann handelsüblich sein und ist eingerichtet, alle flüssigen Komponenten (die in den Behältern einer in die Pistole eingesetzten Mehrkomponentenkartusche - die ebenfalls handelsüblich oder sogar genormt sein kann - enthalten sind) gleichzeitig in einem bestimmten Volumenstromverhältnis aus den Auslassöffnungen der Behälter der Kartusche hinaus zu fördern.

Die erfindungsgemäße Mischeraufsatz-Vorrichtung hat mindestens eine Flanscheinrichtung, einen Drehantrieb, und Adaptereinrichtungen. Sie ist nämlich ausgestattet:
- mit einer Flanscheinrichtung, die eingerichtet ist, einen dynamischen Mischer (wie einleitend beschrieben) an sich (der Vorrichtung) zu befestigen und dabei flüssigkeitsdicht in Leitungsverbindung mit Komponentenzuleitungen der Vorrichtung zu bringen,
- mit einem Drehantrieb, der eingerichtet ist, den Mischereinsatz eines in der Flanscheinrichtung befestigten dynamischen Mischers zu seinem Antrieb Drehmoment-übertragend anzuschließen und
- mit Adaptereinrichtungen, die eingerichtet sind, jeden Behälter (insbesondere jede Auslassöffnung jeden Behälters) der Mehrkomponentenkartusche in Leitungsverbindung mit jeweils mindestens einer der Komponentenzuleitungen zu bringen.

Erfindungsgemäß ergibt sich so (zusammen mit der Pistole und dem dynamischen Mischer und der Kartusche - die alle auch Elemente eines erfindungsgemäßen Systems sein können) insbesondere eine Kunststoff-Mischvorrichtung, die (insbesondere auch einschließlich der Kunststoffkomponenten-Behälter, nämlich der Kartusche) von einer Person nur mit Körperkraft tragbar und handhabbar ist, und eingerichtet ist mindestens zwei flüssige Komponenten zu einem aushärtenden Kunststoff zu mischen.

Die Vorrichtung hat dann eine üblicherweise rohrförmige Durchleitung oder Mischkammer (des dynamischen Mischers) in Leitungsverbindung mit einem Auslass für den gemischten Kunststoff. Die Mischkammer steht in Leitungsverbindung mit Kunststoffkomponenten-Zuleitungen (mindestens zwei - nämlich je nach Anzahl der Komponenten) und mit einem Förderantrieb für die Kunststoffkomponenten-Flüssigkeit (bei den handelsüblichen Pistolen vorzugsweise eine Pneumatik). Die Kunststoffkomponenten-Zuleitungen wiederum befinden sich jeweils in Leitungsverbindung mit einer Anschlussvorrichtung (den Adaptereinrichtungen) für eine Kunststoffkomponenten-Vorratskartusche. Der Förderantrieb kann also pneumatischer Kolbenstößelantrieb sein, der die Kunststoffkomponenten-Vorratskartuschen unter Druck setzt, indem dessen Kolbenstößel gegen die als Kolben verschieblichen Böden der Behälter der Kartusche drücken und so die flüssigen Kunststoffkomponenten gleichzeitig aus der Kartusche hinaus fördern (dies ergibt bei identischem Vorschub auf die Behälterböden ein Verhältnis der Volumenströme aus den Behälterauslässen, das gleich dem Verhältnis der Querschnittsflächen der Behälter ist). Aber zum Beispiel auch eine Förderpumpe je Kunststoffkomponente ist erfindungsgemäß möglich.

Die rohrförmige Mischkammer (nämlich der dynamische Mischer) ist ein Austauschteil - insbesondere auch ein Einwegartikel, also so konstruiert und kalkuliert, dass es sich zum Beispiel schon nach einmaligem Gebrauch entsorgen und ersetzen lässt. Insbesondere unter diesem Aspekt ist es auch erfindungsgemäß, dass die erfindungsgemäße Mischvorrichtung die Mischkammer nicht unmittelbar aufweist, sondern nur eingerichtet ist, eine solche in einer für sie eingerichteten Flanscheinrichtung aufzunehmen.

Erfindungsgemäß weist die Vorrichtung einen Drehantrieb auf. Außerdem ist die zur Verwendung vorgesehene Mischkammer eingerichtet, einen Mischereinsatz mit mindestens einem Verwirbelungselement drehbar in sich aufzuweisen (dynamischer Mischer). Und der Drehantrieb ist angepasst, den Mischereinsatz eines eingesetzten dynamischen Mischers an seinen Antrieb Drehmoment-übertragend anzuschließen.

So wird mittels der Erfindung auch eine Kartuschen-Mischvorrichtung, die von einer Person nur mit Körperkraft tragbar und handhabbar ist, und die sich für das Mischen kleinerer Mengen stets bereithalten lässt, zu dynamischer Mischung eingerichtet. Reparaturen auch von original nur dynamisch mischbaren Kunststoffen werden auch von Hand und vor Ort durch die Erfindung mit dem Originalkunststoff in der Originalrezeptur - also homogen - möglich. Gegenüber bisher in den Hand-Pistolen durchgeführten Mischungen ist der Grad der Durchmischung erheblich verbessert und gleichzeitig erfolgt dies mit deutlich verringertem Druckverlust in der Mischkammer, so dass der Ausstoß oder Austrag bei gleichem Materialtransport-Energieaufwand wesentlich verbessert ist.

Vorzugsweise ist der Drehantrieb ein Pneumatikmotor und/oder der Förderantrieb (wie schon gesagt) pneumatisch. Wenn beide pneumatisch sind, ist es bevorzugt, den Drehantrieb des dynamischen Mischers und den Förderantrieb der Flüssigkeitskomponenten aus derselben Druckluftquelle zu versorgen. Der Drehantrieb kann aber auch zum Beispiel ein Elektromotor sein und/oder der Förderantrieb einer Pumpe, zum Beispiel eine Dosier-, Zahnrad- oder Rollerpumpe.

Der dynamische Mischer, zu dessen Aufnahme die Flanscheinrichtung eingerichtet ist, weist eine Mischkammer auf wie gesagt vorzugsweise in Gestalt eines geradzylindrischen Rohrs als Durchleitung mit einerseits einem Auslassende zum Auslassen von gemischtem Kunststoff und andererseits mit einem Flanschende. Die Flanscheinrichtung ist dann so eingerichtet, dass das Flanschende an der Flanscheinrichtung flüssigkeitsdicht anbringbar ist und dabei das geradzylindrische Mischkammer-Rohr mit einer Abtriebswelle des Drehantriebs geometrisch axial fluchtet. Die Abtriebswelle ist dann eingerichtet, den im Rohr drehbaren Mischereinsatz des dynamischen Mischers zu seinem Antrieb Drehmoment-übertragend anzuschließen. Dies erfolgt vorzugsweise durch einen Haken am Ende der Abtriebswelle, wobei der im Rohr drehbare Mischereinsatz eine Öse (insbesondere in einem Ende des Trägerstabelements des Mischereinsatzes) aufweist, in die der Haken passt. Alternative Ankopplungen sind erfindungsgemäß möglich wie zum Beispiel ein "selbstschneidender Mischeranschluss" (wo sich ein Gewinde am Ende der Abtriebswelle in eine Sacklockbohrung am Antriebsende des Mischereinsatzes (aus Kunststoff) selbstschneidend eindrehen lässt, weil Abtriebswelle, Gewinde, Sacklockbohrung und Mischereinsatz bestimmungsgemäß positioniert allesamt axial zueinander fluchten - siehe z.B. DE 10 2012 004 056.3), oder Klipps, also federnde, formschlüssige Verbindungselemente.

Diese und weitere Vorteile und Merkmale der Erfindung werden anhand der folgenden Abbildungen eines Ausführungsbeispiels der Erfindung weiter beschrieben. Darin zeigen
- Fig. 1: eine geschnittene Seitenansicht einer erfindungsgemäßen Mischvorrichtung und
- Fig. 2: eine entlang B-B geschnittene Vorderansicht der Mischvorrichtung nach Fig. 1.

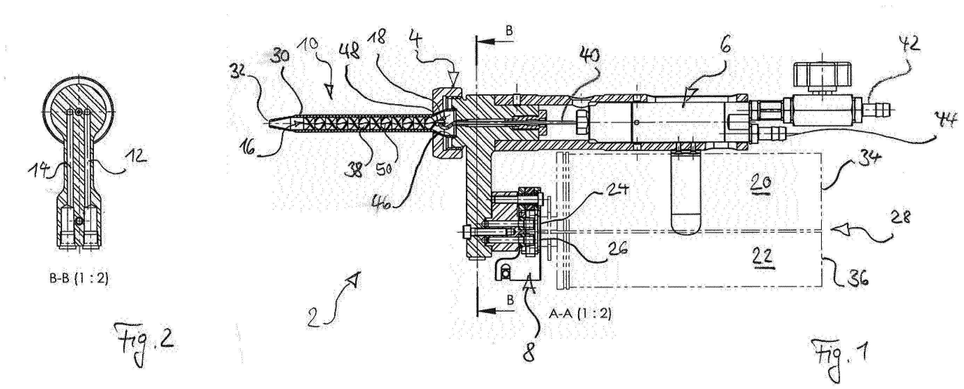

Fig. 1 und 2 zeigen eine Mischeraufsatz-Vorrichtung 2. Sie hat eine Flanscheinrichtung 4, einen Drehantrieb 6, und Adaptereinrichtungen 8. Sie ist nämlich ausgestattet:
- mit einer Flanscheinrichtung 4, die eingerichtet ist, einen dynamischen Mischer 10 (wie einleitend beschrieben) an sich (der Vorrichtung 2) zu befestigen und dabei flüssigkeitsdicht in Leitungsverbindung mit Komponentenzuleitungen 12, 14 der Vorrichtung 2 zu bringen,
- mit einem Drehantrieb 6, der eingerichtet ist, den Mischereinsatz 16 eines in der Flanscheinrichtung 4 befestigten dynamischen Mischers 10 zu seinem Antrieb Drehmoment-übertragend mittels eines Hakens 18 anzuschließen und
- mit Adaptereinrichtungen 8, die eingerichtet sind, jeden Behälter 20, 22 (insbesondere jede Auslassöffnung 24, 26 jeden Behälters 20, 22) einer Mehrkomponentenkartusche 28 in Leitungsverbindung mit jeweils mindestens einer der Komponentenzuleitungen 12, 14 zu bringen.

Erfindungsgemäß ergibt sich so (zusammen mit der Pistole (nicht dargestellt) und dem dynamischen Mischer 10 und der Kartusche 28) eine Kunststoff-Mischvorrichtung, die (insbesondere auch einschließlich der Kunststoffkomponenten-Behälter 20, 22, nämlich der Kartusche 28) von einer Person (nicht dargestellt) nur mit Körperkraft tragbar und handhabbar ist, und eingerichtet ist mindestens zwei flüssige Komponenten zu einem aushärtenden Kunststoff zu mischen.

Die Kunststoff-Mischvorrichtung hat dann eine rohrförmige Durchleitung 30 oder Mischkammer 30 (des dynamischen Mischers 10) in Leitungsverbindung mit einem Auslass 32 für den gemischten Kunststoff. Die Mischkammer steht in Leitungsverbindung mit den zwei Kunststoffkomponenten-Zuleitungen 12, 14. Und die Kunststoff-Mischvorrichtung hat dann einen Förderantrieb für die Kunststoffkomponenten-Flüssigkeit in der handelsüblichen Pistole (nicht dargestellt), nämlich vorzugsweise eine Pneumatik). Die Kunststoffkomponenten-Zuleitungen 12, 14 wiederum befinden sich jeweils in Leitungsverbindung mit einer Anschlussvorrichtung (den Adaptereinrichtungen 8) für die Kunststoffkomponenten-Vorratskartusche 28. Der Förderantrieb kann also pneumatischer Kolbenstößelantrieb sein, der die Kunststoffkomponenten-Vorratskartuschen unter Druck setzt, indem dessen Kolbenstößel gegen die als Kolben verschieblichen Böden 34, 36 der Behälter 20, 22 der Kartusche 28 drücken und so die flüssigen Kunststoffkomponenten gleichzeitig aus der Kartusche hinaus fördern (dies ergibt bei identischem Vorschub auf die Behälterböden ein Verhältnis der Volumenströme aus den Behälterauslässen, das gleich dem Verhältnis der Querschnittsflächen der Behälter 20, 22 ist).

Die rohrförmige Mischkammer (nämlich der dynamische Mischer 10) ist ein Austauschteil - insbesondere auch ein Einwegartikel, also so konstruiert und kalkuliert, dass es sich zum Beispiel schon nach einmaligem Gebrauch entsorgen und ersetzen lässt. Insbesondere unter diesem Aspekt ist es auch erfindungsgemäß, dass die erfindungsgemäße Mischeraufsatz-Vorrichtung 2 die Mischkammer 10, 30, 16 nicht unmittelbar aufweist, sondern nur eingerichtet ist, eine solche in einer für sie eingerichteten Flanscheinrichtung 4 aufzunehmen.

Die Vorrichtung 2 weist einen Drehantrieb 6 auf. Außerdem ist der zur Verwendung vorgesehene dynamische Mischer 10 eingerichtet, einen Mischereinsatz 16 mit mindestens einer Vielzahl propellerartiger Verwirbelungselemente 38 drehbar in sich aufzuweisen (dynamischer Mischer). Und der Drehantrieb 6 ist angepasst, den Mischereinsatz 16 eines eingesetzten dynamischen Mischers 10 an seiner Abtriebswelle 40 durch den Haken 18 Drehmoment-übertragend anzuschließen.

So wird mittels der Erfindung auch eine Kartuschen-Mischvorrichtung, die von einer Person nur mit Körperkraft tragbar und handhabbar ist, und die sich für das Mischen kleinerer Mengen stets bereithalten lässt, zu dynamischer Mischung eingerichtet. Reparaturen auch von original nur dynamisch mischbaren Kunststoffen werden auch von Hand und vor Ort durch die Erfindung mit dem Originalkunststoff in der Originalrezeptur - also homogen - möglich. Gegenüber bisher in den Hand-Pistolen durchgeführten Mischungen ist der Grad der Durchmischung erheblich verbessert und gleichzeitig erfolgt dies mit deutlich verringertem Druckverlust in der Mischkammer, so dass der Ausstoß oder Austrag bei gleichem Materialtransport-Energieaufwand wesentlich verbessert ist. Der Drehantrieb 6 ist ein Pneumatikmotor 6 und der Förderantrieb (wie schon gesagt) vorzugsweise pneumatisch. Wenn beide pneumatisch sind, kann der Drehantrieb des dynamischen Mischers und der Förderantrieb der Flüssigkeitskomponenten aus derselben Druckluftquelle versorgt werden, die sich an geeigneten Anschlüssen 42, 44 anschließen lässt.

Der dynamische Mischer 10, zu dessen Aufnahme die Flanscheinrichtung 4 eingerichtet ist, weist eine Mischkammer 30 auf wie gesagt in Gestalt eines geradzylindrischen Rohrs als Durchleitung mit einerseits einem Auslassende 32 zum Auslassen von gemischtem Kunststoff und andererseits mit einem Flanschende 46. Die Flanscheinrichtung 4 ist dann so eingerichtet, dass das Flanschende 46 an der Flanscheinrichtung 4 flüssigkeitsdicht anbringbar ist und dabei das geradzylindrische Mischkammer-Rohr 30 mit der Abtriebswelle 40 des Drehantriebs 6 geometrisch axial fluchtet. Die Abtriebswelle 40 ist wie gesagt eingerichtet, den im Rohr 30 drehbaren Mischereinsatz 16 des dynamischen Mischers zu seinem Antrieb Drehmoment-übertragend anzuschließen, nämlich durch den Haken 18 am Ende der Abtriebswelle 40, wobei der im Rohr drehbare Mischereinsatz 16 eine Öse 48 (in einem Ende des Trägerstabelements (der Mittelachse 50 der Verwirbelungselemente 38) des Mischereinsatzes 16) aufweist, in die der Haken passt.

## Patentansprüche

1. Mischeraufsatz-Vorrichtung
- eingerichtet zum Befestigen an einer Mehrkomponentenkartuschen-Pistole, die eingerichtet ist, alle flüssigen Komponenten, die in den Behältern einer in die Pistole eingesetzten Mehrkomponentenkartusche enthalten sind, gleichzeitig in einem bestimmten Volumenstromverhältnis aus einer Auslassöffnung des jeweiligen Behälters der Kartusche hinaus und hinein in einen aufsetzbaren statischen Mischer zu fördern,
- mit einer Flanscheinrichtung, die eingerichtet ist, einen dynamischen Mischer an der Vorrichtung zu befestigen und dabei flüssigkeitsdicht in Leitungsverbindung mit Komponentenzuleitungen der Vorrichtung zu bringen,
- mit einem Drehantrieb, der eingerichtet ist, den Mischereinsatz eines in der Flanscheinrichtung befestigten dynamischen Mischers zu seinem Antrieb Drehmoment-übertragend anzuschließen und
- mit Adaptereinrichtungen, die eingerichtet sind, jeden Behälter der Mehrkomponentenkartusche in Leitungsverbindung mit jeweils mindestens einer der Komponentenzuleitungen zu bringen.

2. Vorrichtung nach dem vorhergehenden Anspruch, **dadurch gekennzeichnet, dass** der Drehantrieb ein Pneumatikmotor ist.

3. Vorrichtung nach dem vorhergehenden Anspruch, **dadurch gekennzeichnet, dass** sie eingerichtet ist zum Befestigen an einer pneumatisch angetriebenen Pistole und dass der Pneumatikmotor zur Versorgung durch dieselbe Druckluftquelle wie die Pistole eingerichtet sind.

4. Vorrichtung nach einem der vorhergehenden Ansprüche, **dadurch gekennzeichnet, dass** der dynamische Mischer, zu dessen Aufnahme die Flanscheinrichtung eingerichtet ist, eine Mischkammer aufweist in Gestalt eines geradzylindrischen Rohrs als Durchleitung mit einem Auslassende zum Auslassen von gemischtem Kunststoff und mit einem Flanschende, dass die Flanscheinrichtung so eingerichtet ist, dass das Flanschende an der Flanscheinrichtung flüssigkeitsdicht anbringbar ist und dabei das geradzylindrische Rohr mit einer Abtriebswelle des Drehantriebs geometrisch axial fluchtet und dass die Abtriebswelle eingerichtet ist, einen im Rohr drehbaren Mischereinsatz des dynamischen Mischers zu seinem Antrieb Drehmoment-übertragend anzuschließen.

5. Vorrichtung nach dem vorhergehenden Anspruch, **dadurch gekennzeichnet, dass** die Abtriebswelle durch einen Haken an ihrem Ende eingerichtet ist, einen im Rohr drehbaren Mischereinsatz mit einer Öse, in die der Haken passt, des dynamischen Mischers zu seinem Antrieb Drehmoment-übertragend anzuschließen.

## Claims

1. Mixer attachment device
- configured to be fastened to a multi-component cartridge gun which is configured to transport all liquid components which are contained in the containers of a multi-component cartridge fitted into the gun simultaneously, in a particular volume flow ratio, out of an outlet opening of the respective container of the cartridge and into a static mixer which can be fitted thereon,
- with a flange arrangement which is configured to fasten a dynamic mixer to the device and thereby create a liquid-tight line connection with component feed lines of the device,
- with a rotary drive which is configured to connect the mixer insert of a dynamic mixer fastened in the flange arrangement in a torque-transmitting manner in order to drive it and
- with adapter arrangements which are configured to bring each container of the multi-component cartridge in line connection with in each case at least one of the component feed lines.

2. Device according to the preceding claim, **characterised in that** the rotary drive is a pneumatic motor.

3. Device according to the preceding claim, **characterised in that** it is configured to be fastened to a pneumatically driven gun and **in that** the pneumatic motor is configured to be supplied by the same compressed air source as the gun.

4. Device according to one of the preceding claims, **characterised in that** the dynamic mixer which the flange arrangement is configured to receive has a mixing chamber in the form of a straight cylindrical tube as a conduit with an outlet end for discharging mixed plastic and with a flange end, **in that** the flange arrangement is configured such that the flange end can be attached to the flange arrangement in a liquid-tight manner and the straight cylindrical tube thereby aligns in a geometrically axial manner with an output shaft of the rotary drive and **in that** the output shaft is configured to connect in a torque-transmitting manner with a mixer insert of the dynamic mixer inserted rotatably within the tube in order to drive it.

5. Device according to the preceding claim, **characterised in that** the output shaft is configured, by means of a hook on its end, to connect in a torque-transmitting manner with a mixer insert of the dynamic mixer inserted rotatably within the tube, which has an eye into which the hook fits, in order to drive it.

## Revendications

1. Dispositif avec accessoire mélangeur
- configuré pour être fixé sur un pistolet à cartouche multicomposants qui est configuré pour faire sortir tous les composants liquides contenus dans les récipients d'une cartouche multicomposants insérée dans le pistolet, en même temps selon un rapport de débit volumique déterminé hors d'un orifice d'évacuation du récipient respectif de la cartouche et les faire rentrer dans un mélangeur statique pouvant être installé,
- avec un système de bride qui est configuré pour fixer un mélangeur dynamique sur le dispositif et venir en raccord étanche aux liquides avec des alimentations de composants du dispositif,
- avec un entraînement rotatif configuré pour raccorder l'accessoire mélangeur d'un mélangeur dynamique fixé dans le système de bride à son entraînement par transmission de couple et
- avec des systèmes adaptateurs configurés pour amener chaque récipient de la cartouche multicomposants en raccord avec respectivement au moins l'une des alimentations de composants.

2. Dispositif selon la revendication précédente, **caractérisé en ce que** l'entraînement rotatif est un moteur pneumatique.

3. Dispositif selon la revendication précédente, **caractérisé en ce qu'**il est configuré pour être fixé sur un pistolet à entraînement pneumatique et **en ce que** le moteur pneumatique est configuré pour être alimenté par la même source d'air comprimé que le pistolet.

4. Dispositif selon l'une quelconque des revendications précédentes, **caractérisé en ce que** le mélangeur dynamique, que le système de bride est configuré pour recevoir, présente une chambre de mélange sous forme d'un tuyau cylindrique droit servant d'acheminement avec une extrémité de sortie pour décharger du plastique mélangé et avec une extrémité de bride, **en ce que** le système de bride est configuré de sorte que l'extrémité de bride peut être appliquée au système de bride de manière étanche aux liquides et que le tube cylindrique droit est ainsi géométriquement aligné axialement avec un arbre de sortie de l'entraînement rotatif et que l'arbre de sortie est configuré pour raccorder par transmission de couple un accessoire mélangeur du mélangeur dynamique pouvant tourner dans le tuyau à son entraînement.

5. Dispositif selon la revendication précédente, **caractérisé en ce que** l'arbre de sortie est configuré par un crochet à son extrémité, pour raccorder par transmission de couple un accessoire mélangeur du mélangeur dynamique pouvant tourner dans le tuyau à son entraînement au moyen d'un anneau dans lequel le crochet passe.
